# EUROPEAN PATENT SPECIFICATION

(11) **EP 1 652 730 B1**
(45) Date of publication and mention of the grant of the patent: **12.06.2019**
(21) Application number: 05021309.9
(22) Date of filing: 29.09.2005
(51) Int. Cl.: B60R 13/08

(54) **Soundproof cover**
Schalldämmende Abdeckung
Couvercle antibruit

(30) Priority: 30.09.2004 JP 2004287472
(43) Date of publication of application: 03.05.2006
(73) Proprietor: NICHIAS CORPORATION, Chuo-ku Tokyo 104-8555 (JP)
(72) Inventor: Niwa, Takahiro, Minato-ku, Tokyo 105-8555 (JP); Mori, Tadashi, Yokohama-shi, Kanagawa 230-0053 (JP); Kondoh, Motonori, Toyota-city, Aichi 471-0833 (JP)
(74) Representative: Grünecker Patent- und Rechtsanwälte PartG mbB

(56) References cited:
- EP-A- 1 034 920
- US-A- 5 744 763
- PATENT ABSTRACTS OF JAPAN vol. 2002, no. 07, 3 July 2002 (2002-07-03) & JP 2002 087180 A (PURAMAKKU KK; TOYOTA MOTOR CORP), 26 March 2002 (2002-03-26)
- PATENT ABSTRACTS OF JAPAN vol. 2003, no. 09, 3 September 2003 (2003-09-03) & JP 2003 127714 A (FUJI HEAVY IND LTD), 8 May 2003 (2003-05-08)
- PATENT ABSTRACTS OF JAPAN vol. 2003, no. 12, 5 December 2003 (2003-12-05) & JP 2003 280666 A (KASAI KOGYO CO LTD), 2 October 2003 (2003-10-02)
- PATENT ABSTRACTS OF JAPAN vol. 1999, no. 12, 29 October 1999 (1999-10-29) & JP 11 202872 A (KOMATSU LTD; SANYO:KK), 30 July 1999 (1999-07-30)
- PATENT ABSTRACTS OF JAPAN vol. 2002, no. 11, 6 November 2002 (2002-11-06) & JP 2002 215169 A (KASAI KOGYO CO LTD), 31 July 2002 (2002-07-31)

## Description

### FIELD OF THE INVENTION

The present invention relates to a use of a soundproof cover for covering a component of an automobile to be a sound source.

### BACKGROUND OF THE INVENTION

There are a large number of sound sources in an automobile. From the viewpoint of a demand for quietness in inside and outside of a car, various soundproof measures have been taken. In particular, in regard to components that have large component sizes and generate loud sounds and emit the sounds in all directions such as an engine, a transmission and a driving system, drastic soundproof measures are required in positions near the components. Thus, a dedicated soundproof component called a soundproof cover is used.

There have been known a soundproof cover constituted by: a sound insulating material with high rigidity formed of a material such as metal, polyamide or polypropylene, and a sound absorbing material; a damping material; and a vibration insulating material (e.g., JP 2004 44526 A). There have also been known a soundproof cover in which a large number of small projections are formed on surfaces in order to irregularly reflect noise in the soundproof cover and eliminate the noise (e.g., JP 2001 10544 A). These soundproof covers are designed aiming mainly at insulating noise from the sound sources with the soundproof covers. JP2002087180 also discloses such a cover.

For evaluation of noise inside and outside of a car, a sound pressure level (dB) obtained by logarithmically compressing an observed sound pressure is used as an evaluation criterion close to an amount of the sound sensed by the human, since the noise itself is an amount of sense of a human. However, the sound pressure level is significantly affected by a measured largest sound because of a characteristic of dB sum calculation. Consequently, when a multi-directional average (total sound) that is generally used in evaluating a comprehensive soundproof effect is calculated, even if a sound pressure level is reduced only in one direction in which soundproof measures are taken, a sound pressure level as a whole may not be suppressed in some cases.

JP S64 60451 A1 discloses a ceiling material provided on the side of a panel in an automobile roof. The above ceiling material is formed of a ceiling base material and a facing material stuck to the lower surface of the ceiling base material. By forming this ceiling base material of material obtained by impregnating flexible cellular plastic having an open cell structure with hard synthetic resin an improvement in heat and sound insulation properties can be obtained. Further, with respect to the production process, it is mentioned in this document that the impregnated polyester cotton is put on top of the ceiling base material and then press-fitted to the ceiling base material simultaneously with molding.

Further, from EP 0 428 786 A1, a sound reducing liner in the form of a shaped body for the engine bay of motor vehicles is known, the liner consisting of a carbon fiber material layer which is bound to an inorganic fiber material layer. A binding compound containing melamine resin is applied to and prereacted with the carbon fiber material layer. The inorganic fiber material layer (comprising, for example, rock wool, ceramic wool, glass wool, quartz wool) has a sound-absorbing effect. Moreover, after activation of the binding compound containing melamine resin, the carbon fiber material layer and the inorganic fiber material layer are laminated to each other under the influence of heat and pressure. The final three-dimensional shaping is made by the unitary joint deformation of the two layers.

However, when such a soundproof cover mentioned above using a sound insulating material is used in a section where a loud sound is generated as described above, the soundproof cover may cause a phenomenon in which a secondary emission sound reflected on an inner surface of the sound insulating material may repeat irregular reflection complicatedly between the soundproof cover and an object to be covered with the soundproof cover, and then the secondary emission sound is collected into a narrow gap between an end of the soundproof cover and the object and finally radiated therefrom as a louder sound. Regarding an engine section of some luxury cars, measures against noise inside of the car are taken by covering an entire upper surface of the engine section with an engine cover (a soundproof cover) to insulate sound. However, a reflected sound on an inner surface of the soundproof cover is radiated from an opening in a lower part of a body of the car to affect noise outside of the car. Therefore, an effect of soundproof measures in all directions is not obtained with the single soundproof cover. In particular, in a soundproof cover having a large deep R shape, reflected sounds collected in a principle of a parabolic antenna gather at an end of the cover, and then the gathered sounds are radiated therefrom. Thus, on the contrary, a noise level is worsened by working the soundproof cover in some cases. Moreover, thickness of a workable sound absorbing material also tends to be small, since clearances among components tend to be small in accordance with a reduction in size of vehicles. Thus, it is becoming difficult to take soundproof measures.

Therefore, it is an object of the present invention to provide a use of a soundproof cover that prevents gathering of sounds reflected in the soundproof cover and local emission of the gathered sounds.

### SUMMARY OF THE INVENTION

The above object is solved according to the present invention by the use of a soundproof cove having the features of independent claim 1. Advantageous refinements of the invention are the dependent claims 2 to 6.

The present inventors have made eager investigation to examine the problem. As a result, the inventors have found that it is possible to reduce a sound pressure level not only in a specific direction but also in all directions equally by transmitting or attenuating radiated sounds, which are not absorbed by a sound absorbing material, from an entire cover.

Embodiments are mainly directed to the following items:
(1) A soundproof cover comprising: a sound absorbing material; and a skin material adhesively provided on a surface of the sound absorbing material, wherein the skin material comprises a material having at least one of air permeability or flexibility.
(2) The soundproof cover according to item (1), wherein the skin material is at least one of nonwoven fabric, cloth, a laminate film, a rubber sheet, a resin film, a damping resin and a damping rubber.
(3) The soundproof cover according to item (1), which further comprises a frame material having air permeability on a surface of the skin material opposite to a surface on that the sound absorbing material is provided.
(4) The soundproof cover according to item (1), wherein the skin material is a nonwoven fabric having a unit weight of 200 to 600 g/m².
(5) The soundproof cover according to item (1), wherein the skin material is a pre-impregnated sheet comprising: a laminate film; and a nonwoven fabric or a cloth.

### BRIEF DESCRIPTION OF THE DRAWINGS

Fig. 1 is a sectional view showing an example of a soundproof cover of the present invention.
Fig. 2 is a sectional view showing a soundproof effect test apparatus.
Fig. 3 is a top view showing the soundproof effect test apparatus.
Fig. 4 is a graph showing a relation of a transmitted sound level with respect to a 1/3 octave band center frequency in regard to soundproof covers of various constitution.
Fig. 5 is a graph showing a relation of a reflected sound level with respect to a 1/3 octave band center frequency in regard to the soundproof covers of various constitutions.
Fig. 6 is a graph showing a relation of a total sound level with respect to a 1/3 octave band center frequency in regard to the soundproof covers of various constitutions.

The reference numerals used in the drawings denote the followings, respectively.
1: Soundproof cover
2: Sound absorbing material
3. Skin material
4. Frame material

### DETAILED DESCRIPTION OF THE INVENTION

The present invention will be hereinafter explained in detail.

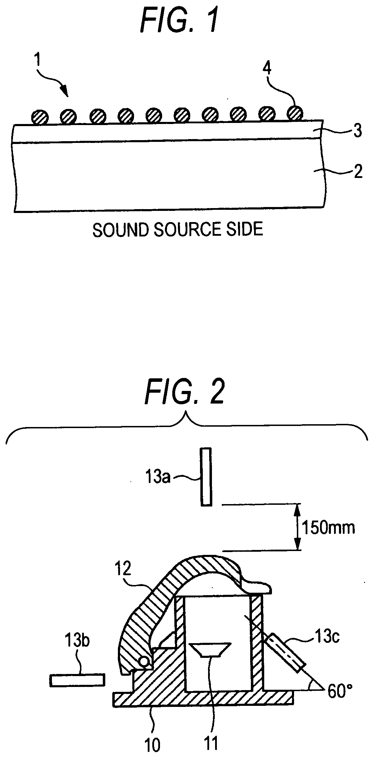

A soundproof cover of the present invention has at least: a sound absorbing material; and a skin material comprising a material having at least air permeability or flexibility and adhesively provided on the surface of the sound absorbing material. A bonding method and a bonding agent are not specifically limited. Moreover, in order to process a shape of the soundproof cover to be followable to a component and increase strength of the soundproof cover, a frame material having air permeability may be further provided on a surface of the skin material opposite to a surface having the sound absorbing material. Size and shape of the soundproof cover are not limited as long as the soundproof cover can cover a component to be a sound source. However, for example, a sectional structure schematically shown in Fig. 1 can be illustrated.

As shown in Fig. 1, a soundproof cover 1 of the present invention is provided such that a sound absorbing material 2 is toward a sound source. In this case, a component to be a sound source (not shown) and the sound absorbing material 2 may be in contact with or separated from each other. In the present invention, a soundproof cover further comprises a frame material having air permeability on a surface of the skin material opposite to a surface on that the sound absorbing material is provided. When a frame material 4 is further provided, the frame material 4 is preferably set on a surface of a skin material 3 on that the sound absorbing material 2 is not provided, i.e., a surface opposite to the sound source. In Fig. 1, mesh metal is described as an example of the frame material 4.

In the present invention, the skin material is a material having a characteristic of transmitting (permeability) a radiated sound that is not absorbed by the sound absorbing material or a material having a characteristic of attenuating a sound pressure level of a transmitted sound (attenuating property) by deforming (or vibrating) itself. The skin material of the present invention comprises a material having at least one of air permeability or flexibility.

As a material having air permeability, a nonwoven fabric or a cloth is preferable. Further, a canvas, GORETEX, a felt is also preferable. In particular, a nonwoven fabric having low air permeability is preferable because the nonwoven fabric is excellent in a soundproof effect that is an object of the present invention.

In the case of using a nonwoven fabric as the material having air permeability, it is preferable to adjust the nonwoven fabric to have a proper air permeability by controlling raw materials thereof such as a textile material or binder resin. It is possible to use a nonwoven fabric manufactured from a material such as: an organic synthetic fiber of PE, PP, polyester, PET, EVA, POVAL, acrylic, polyamide, NOMEX or aramid; a natural fiber such as cellulose or kenaf; a glass fiber; and mixed fabric of these fabrics, by a method such as chemical bonding, thermal bonding, needle punching, spun lacing, stitch bonding, spun bonding, a wet method using. Furthermore, it is preferable to set a unit weight of the nonwoven fablic to 200 to 600 g/m² in order to obtain a proper air permeability and attenuating property.

In the case of using a cloth as the material having air permeability, it is preferable to adjust the cloth to have a proper air permeability by controlling raw materials thereof such as a textile material or binder resin. It is possible to use a cloth manufactured from a material such as: a glass fiber; a ceramic fiber (including a silica fiber, an aluminum fiber, and a mullite fiber); a natural fiber such as cellulose; an organic synthetic fiber; a metal fiber such as SUS; and mixed fabric of these fabrics, by a method such as chopped stranding, lobing, or lagging. Furthermore, weaving method such as plain weave, lease weave, satin weave, pattern weave and leno weave is preferable in order to obtain a cloth having a proper permeability and attenuating property.

As a material having flexibility, a rubber sheet, a resin film, damping resin, damping rubber or a laminate film is preferable. Holes may be provided on the material in order to give proper air permeability to these materials.

In the case of using a rubber sheet as a material having flexibility, a rubber sheet having a thickness of properly thin is preferable. Examples of the rubber sheet include a rubber sheet obtained by mixing a filler such as carbon black into a rubber such as NR, SBR, CR, NBR, IIR, silicone rubber, EPDM, urethane rubber, acrylic rubber or poly-norbornane rubber and a mixture of these rubbers. A rubber sheet of the present invention preferably has a hardness of 50 to 80 (by a durometer) and a thickness of 0.3 to 3 mm.

In the case of using the resin film as a material having flexibility, a resin film having proper flexibility is preferable. Examples of the resin film include PE, PP, polyester, PET, EVA, POVAL, acrylic, polyamide, styrene, PVC or urethane and a mixture of these materials. A resin film of the present invention preferably has a hardness of 70 to 90 (by a durometer) and a thickness of 30 to 200 µm is preferable.

In the case of using the damping resin as a material having flexibility, a damping resin obtained by mixing: a metal oxide such as iron oxide, titanium oxide or magnesium oxide; a particulate metal powder; a pulverizing product of a mineral such as clay, talc, mica, quartz or calcite; and an asphalt into a resin such as styrene-isobutylene copolymer, ethylene-vinyl acetate copolymer, thermoplastic urethane resin or vinyl chloride. The dumping resin of the present invention preferably has a thickness of 0.5 to 3 mm.

In the case of using the damping rubber as a material having flexibility, a damping rubber obtained by mixing: a metal oxide such as iron oxide, titanium oxide or magnesium oxide; a particulate metal powder; a pulverizing product of mineral such as clay, talc, mica, quartz or calcite; and an asphalt into a resin such as NR, SBR, CR, NBR, IIR, silicone rubber, EPDM, urethane rubber, acrylic rubber or poly-norbornane rubber and a mixture of these rubbers. The dumping rubber of the present invention preferably has a thickness of 0.5 to 3 mm.

In the case of using a laminate film as a material having flexibility, the laminate film having a characteristic of being softened by heat can be used. It is possible to use a commercially available laminate film. However, a laminate film of the present invention preferably has a thickness of 30 to 200 µm.

Furthermore, a laminate obtained by appropriately combining the material having air permeability and the material having flexibility can also be used as a skin material. Although a combination of the materials is not particularly limited, it is preferable that the number of stacked layers is 2 to 6 and overall thickness of the laminate is 0.5 to 3 mm. Examples of the laminate include a sheet obtained by combining the laminate film and the nonwoven fabric or the cloth. In combining the materials, a method comprising stacking these materials and subjecting a pre-impregnating treatment is preferable. Namely, the skin material is preferably a pre-impregnated sheet comprising: a laminate film; and a nonwoven fabric or a cloth. The number of stacked layers is preferably 3 to 7. Although there is no limitation in a lamination structure and a combination of materials, it is preferable that a structure is a repetition pattern such as nonwoven fabric/film/nonwoven fabric and the outermost layer is a material having air permeability.

A sound absorbing material is not particularly limited as long as the material is a material generally used for a soundproof cover such as a porous material, a foamed material, an convexoconcave material or a felt material. A quality and thickness of the sound absorbing material may be set appropriately according to a sound source.

In the present invention, the frame material having a structure having air permeability (mesh, weave pattern, hole, etc.) and having rigidity higher than the sound absorbing material and the skin material can be used. Examples thereof include a punching metal or an expand metal other than the mesh metal shown in Fig. 1 as the frame material 4.

In the case of using the mesh metal as a frame material, there is no limitation on a method of weaving, and it is preferable that a diameter of wire of a metal line is 0.15 to 0.3 mm.

In the case of using the punching metal as a frame material, a rate of hole area is preferably 20 to 80%, and a thickness of a metal plate is preferably 0.15 to 0.3 mm.

In the case of using the expand metal as a frame material, there is no limitation on a method of opening, a diameter of wire of a metal line is preferably 0.15 to 0.3 mm.

### EXAMPLES

The present invention is now illustrated in greater detail with reference to Examples and Comparative Examples, but it should be understood that the present invention is not to be construed as being limited thereto.

### Example A

A skin material was prepared by stacking a nonwoven fabric, a hot-melt laminate film and a nonwoven fabric in this order to obtain a stacked material, and subjecting a pre-impregnating treatment to the stacked material. The prepared skin material was bonded to a sound absorbing material, and formed to a predetermined shape, and then a soundproof cover of Example A was prepared.

In this example and the following Comparative Example A, SPUNBOND 90503 (manufactured by Yunitika Ltd.) was used as the nonwoven fabric, ELPHAN OH-501 (thickness of 80 µm; manufactured by Nihon Matai Co., Ltd.) was used as the hot melt laminate film, and reproduced polyethylene terephthalate (PET) fiber (thickness of 10 mm; transmission loss in a transmission direction of 3 dB) was used as the sound absorbing material.

### Comparative Example A

A sound absorbing material and a skin material of a polyamide 66 (PA 66 with thickness of 3 mm) was bonded, and formed to a predetermined shape, to obtain a soundproof cover of Comparative Example A.

### Soundproof Effect Test 1

Noise of 10 dB or more in a sound pressure level is emitted from a cover of a transmission gear box (hereinafter also referred to as "gear box cover") that is provided on a lower side of a vehicle body and transmits engine power to a propeller shaft. This is a significant problem for measures against noise outside a car. However, in connection with a setting position, there is almost no clearance between the cover and components around the cover, a chassis, and the like. Thus, measures such as installation of a thick sound absorbing material layer cannot be taken in many cases. Thus, in this test, a soundproof effect in the soundproof cover of the present invention was checked assuming the circumstances described below.

A state of a object was adjusted such that sound pressure levels of noise emitted from the gear box cover to the periphery were 97 dB in a front direction, 97 dB in a rear direction, 104 dB in a left direction, and 94 dB in a right direction and an average noise level in the four directions was 100 dB.

When the soundproof cover of Comparative Example A was mounted on the object, the sound pressure level was reduced to 85 dB in the left direction. However, the sound pressure levels worsened to 104 dB in the front direction, 104 dB in the rear direction, 102 dB in the right direction, and 102dB as the average in the four directions.

On the other hand, when the soundproof cover of Example A was mounted on the object, the sound pressure level of the transmitted sound in the left direction fell only a little to 98 dB. However, the sound pressure levels in the respective directions fell in average: the sound pressure levels fell to 98 dB in the front direction, 98 dB in the rear direction, and 97 dB in the right direction. Moreover, the average noise level in the four directions fell to 98 dB. Thus, a noise reduction effect was also recognized as a whole.

Consequently, it was confirmed that, when the conventional soundproof cover made of a rigid (sound shielding) material such as Comparative Example A is used, sound pressure level were reduced only in a direction in which the soundproof cover was mounted but worsened in the remaining directions from those before mounting the soundproof cover because reflected sounds overlap. Thus, as a result, an overall sound reduction effect was not obtained and a contrary effect was caused by mounting the soundproof cover. On the other hand, with the soundproof cover of the present invention, although a sound pressure level did not fall much in a direction in which the soundproof cover was mounted, since reflection in the soundproof cover did not occur easily, noise was controlled as a whole.

### Example B-E, and Comparative Example B

Five test specimens of the soundproof cover were manufactured using respective materials shown in Table 1.

In those examples and comparative example, the same material as Example 1 was used for the nonwoven fabric, and ELPHAN 0H-501 (thickness of 100 µm) was used for the hot melt laminate film in addition to the same material as the first embodiment, reproduced polyethylene terephthalate (PET) fiber (thickness of 20 mm) was used for the sound absorbing material.

**Table 1**

| Name of Test Specimen | Sound Absorbing Material | Skin Material | Frame Material |
|---|---|---|---|
| Comparative Example B | PET felt (thickness: 20 mm) | Nylon 66 (talc 20%) (thickness: 2 mm) | |
| Example B | | Nonwoven fabric | Hexagonal wire mesh (diameter of wire: 0.25 mm) |
| Example C | | Laminate of three layers of: | Hexagonal wire mesh (diameter of wire: 0.25 mm) |
| | | Nonwoven fabric/ Laminate film (thickness: 80 µm)/ Nonwoven fabric | |
| Example D | | Laminate of five layers of: | Expand metal (diameter of wire: 0.3 mm) |
| | | Nonwoven fabric/ Laminate film (thickness: 80 µm)/ Nonwoven fabric/ Laminate film (thickness: 100 µm)/ Nonwoven fabric | |
| Example E | | Damping resin (thickness; 1 mm) | Hexagonal wire mesh (diameter of wire: 0.25 mm) |

### Soundproof Effect Test 2

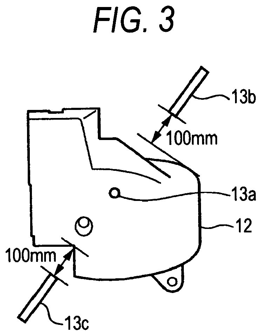

An apparatus of a constitution shown in Figs. 2 and 3 was used for the test. The test was performed in an anechoic room. A speaker 11 was set in the center of a box 10 imitating a component (a gear box) of an automobile. A soundproof cover 12 was mounted to cover an opening of the box 10. Measurement points for noise were set in three positions. First, in order to measure a transmitted sound from the soundproof cover 12, a measurement device 13a was set in a position opposed to the speaker 11 across the opening of the box 10 and the soundproof cover 12 and 150 mm apart from the soundproof cover 12. Measurement devices in the remaining two positions were set to measure reflected sounds that could leak out. A measurement device 13b was set in a position 100 mm apart from an end of the soundproof cover 12. A measurement device 13c was set in a position 100 mm apart from a portion, which is not covered with the soundproof cover 12 in the box 10, and inclined 60° with respect to a bottom surface of the box 10. The respective measurement devices were finely adjusted to a position where a sound pressure level was maximized finally by a directional microphone. A sound radiated from the speaker 11 was set to white noise (adjusted to be 100 dB in the measurement device 13a in a state in which the soundproof cover 12 was not mounted).

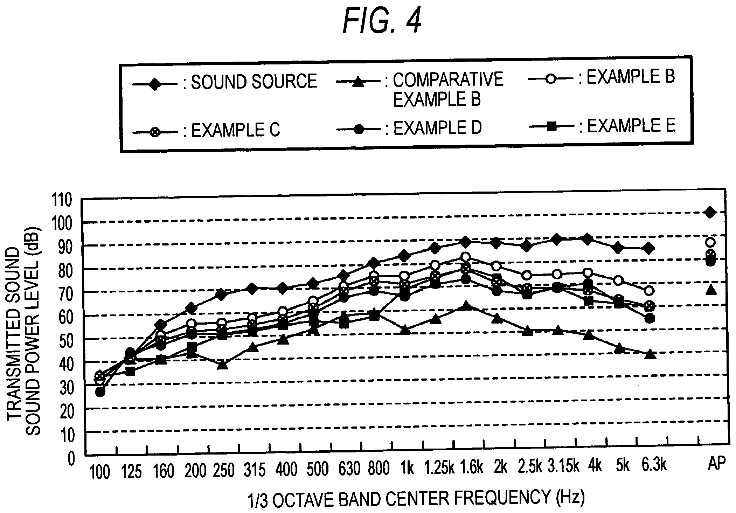

Results of the measurement of the respective test specimens are shown in Figs. 4 to 6.

Fig. 4 is a gram showing a relation of a transmitted sound level with respect to a 1/3 octave band center frequency of the respective test specimens. It is seen that transmitted sound levels are lower than that of a sound source by about 10 to 20 dB in the respective examples and a transmitted sound level of a Comparative Example B is lower than those of the respective examples by about 10 dB or more. Comparing with Examples B, C and D, there is a tendency that the more stacked layers of nonwoven fabric and a laminate film increase, the less a sound transmitted.

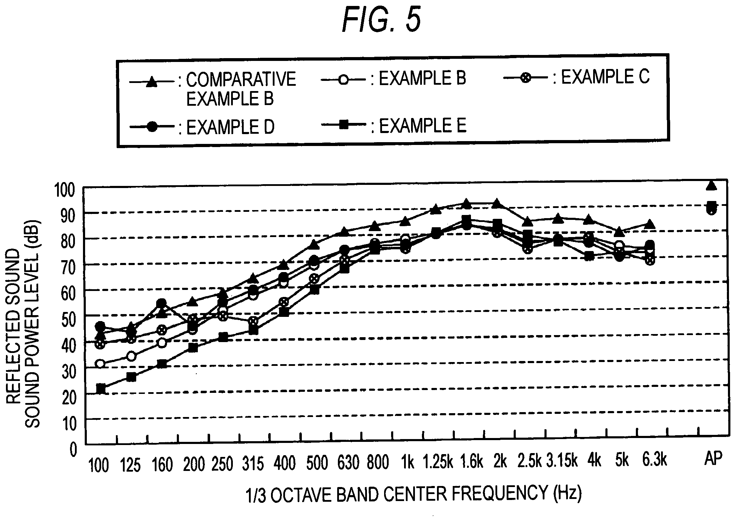

Fig. 5 is a graph showing a relation of a reflected sound level with respect to a 1/3 octave band center frequency of the respective test specimens. The reflected sound level is an average value in two directions in the measurement device 13b and the measurement device 13c. As shown in Fig. 5, in almost all frequencies, the reflected sound level of Comparative Example B is higher than those of the other Examples by about 10 dB. In Examples, a result was different for each material in a frequency range of lower than about 1 kHz and no significant difference was observed in a frequency range of not less than about 1 kHz.

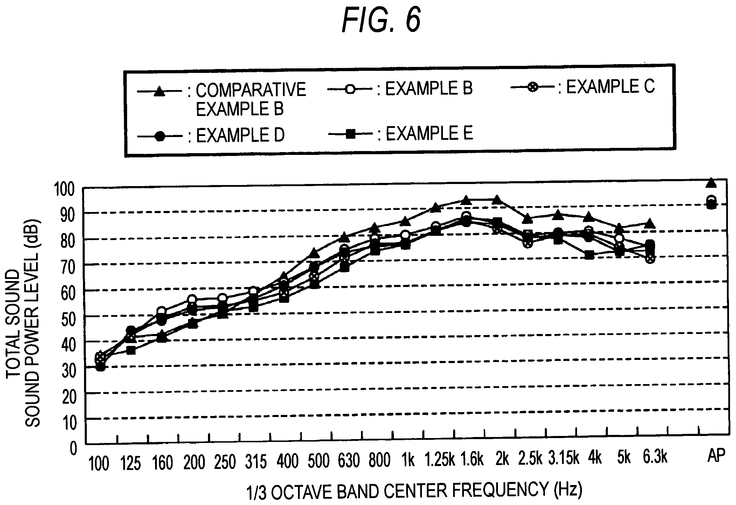

Fig. 6 is a graph showing a relation of a total sound (a transmitted sound + a reflected sound) with respect to a 1/3 octave band center frequency. First, it is seen that waveform depends on measurement of a reflected sound level rather than measurement of a transmitted sound level. In Comparative Example B, it was confirmed that the total sound level was higher than that of the sound source depending on a frequency. On the other hand, in Example E, the total sound level was lower than not only that of the sound source but also that of Comparative Example B in almost all frequencies. In the other Examples, the total sound level was lower those of the sound source and Comparative Example B by about 10 dB in a wide range of frequencies equal to or higher than about 400 Hz.

Consequently, in the conventional technique (Comparative example B), the transmitted sound was controlled to a level extremely lower than that of the sound source because of a sound insulation effect. However, the reflected sound on the inner surface of the cover was accumulated and increased. A difference between the transmitted sound and the reflected sound was as large as about 40 dB at the maximum. However, it can be said that, because of the characteristic of dB sum calculation that a sound pressure level is significantly affected by a measured largest sound, to the contrary, a total sound of the transmitted sound and the reflected sound was eventually increased to a high level by the increased reflected sound. On the other hand, in the present invention (Examples B to E), both the transmitted sound level and the reflected sound level was lower than those of the sound source and a difference between the transmitted sound level and the reflected sound level was no more than about 10 dB. There was not such a significant difference as that in Comparative Example B. Since the transmitted sound level and the reflected sound level were reduced equally, as a result, it was recognized that an overall noise reduction effect was realized.

Namely, since a soundproof cover of the present invention includes a sound absorbing material opposed to the sound source and a skin material comprising a material having at least one of air permeability or flexibility, the soundproof cover can reduce sound pressure levels in respective directions equally.

While the present invention has been described in detail and with reference to specific embodiments thereof, it will be apparent to one skilled in the art that various changes and modifications can be made therein without departing from the spirit and scope thereof.

The present application is based on Japanese Patent Application No. 2004-287472 filed on September 30, 2004.

## Claims

1. Use of a soundproof cover (1, 12) for covering a component of an automobile to be a sound source, said soundproof cover (1, 12) comprising:
a sound absorbing material (2) which is provided such that the sound absorbing material (2) is toward the sound source, and
a skin material (3) adhesively provided on a surface of the sound absorbing material (2) which is opposite to the sound source, wherein the skin material (3) comprises a
material having at least one of air permeability or flexibility,
and said soundproof cover (1, 12) being produced by:
preparing the skin material (3) by stacking a nonwoven fabric, a hot-melt laminate film and a nonwoven fabric in this order to obtain a stacked material, and subjecting a pre-impregnating treatment to the stacked material;
laminating the sound absorbing material (2) and the prepared skin material (3) to form a laminate; and
forming the laminate into a predetermined shape of the soundproof cover (1, 12).

2. Use according to claim 1, **characterized by** a frame material (4) having air permeability on a surface of the skin material (3) opposite to a surface on that the sound absorbing material (2) is provided.

3. Use according to claim 1, **characterized in that** the nonwoven fabric has a unit weight of 200 to 600 g/m².

4. Use according to claim 2, **characterized in that** the frame material (4) has at least one structure selected from the group consisting of mesh, weave pattern and hole.

## Patentansprüche

1. Verwendung einer schalldichten Abdeckung (1, 12) für das Abdecken einer als einer Schallquelle wirkenden Komponente eines Automobils, wobei die schalldichte Abdeckung (1, 12) umfasst:
ein Schallabsorptionsmaterial (2), das derart vorgesehen ist, dass das Schallabsorptionsmaterial (2) der Schallquelle zugewandt ist, und
ein Folienmaterial (3), das klebend an einer zu der Schallquelle gegenüberliegenden Oberfläche des Schallabsorptionsmaterials (2) vorgesehen ist, wobei das Folienmaterial (3) ein Material mit einer Luftdurchlässigkeit und/oder einer Flexibilität umfasst,
wobei die schalldichte Abdeckung (1, 12) erzeugt wird durch:
Vorbereiten des Folienmaterials (3) durch das Schichten eines nicht-gewebten Textils, einer Schmelzlaminatfolie und eines nicht-gewebten Textils in dieser Reihenfolge, um ein geschichtetes Material zu erhalten, und das Ausüben einer Vorimprägnierungsbehandlung auf das geschichtete Material,
Laminieren des Schallabsorptionsmaterials (2) und des vorbereiteten Folienmaterials (3), um ein Laminat zu bilden, und
Formen des Laminats zu einer vorbestimmten Form der schalldichten Abdeckung (1, 12).

2. Verwendung nach Anspruch 1, **gekennzeichnet durch** ein Rahmenmaterial (4) mit einer Luftdurchlässigkeit auf einer Oberfläche des Folienmaterials (3) gegenüber der Oberfläche, an der das Schallabsorptionsmaterial (2) vorgesehen ist.

3. Verwendung nach Anspruch 1, **dadurch gekennzeichnet, dass** das nicht-gewebte Textil ein Einheitsgewicht von 200 bis 600 g/m² aufweist.

4. Verwendung nach Anspruch 2, **dadurch gekennzeichnet, dass** das Rahmenmaterial (4) eine Netz-, Wellenmuster- und/oder Lochstruktur aufweist.

## Revendications

1. Utilisation d'un couvercle antibruit (1, 12) destiné à recouvrir un composant d'automobile représentant une source sonore, ledit couvercle antibruit (1, 12) comprenant :
un matériau d'absorption des sons (2) qui est disposé de sorte à ce que le matériau d'absorption des sons (2) se trouve vers la source sonore, et
un matériau de revêtement (3) disposé en étant collé sur une surface du matériau d'absorption des sons (2) qui est opposée à la source sonore, le matériau de revêtement (3) comprenant un matériau présentant au moins une caractéristique parmi une perméabilité à l'air ou une souplesse,
et ledit couvercle antibruit (1, 12) étant fabriqué par :
la préparation du matériau de revêtement (3) en empilant un textile non-tissé, un film stratifié thermo fusible et un textile non-tissé dans cet ordre pour obtenir un matériau en couches, et la soumission du matériau en couches à un traitement de pré imprégnation,
la stratification du matériau d'absorption des sons (2) et du matériau de revêtement (3) préparé pour former un stratifié, et
le façonnage du stratifié en une forme prédéterminée du couvercle antibruit (1, 12).

2. Utilisation selon la revendication 1, **caractérisé par** un matériau de structure (4) présentant une perméabilité à l'air sur une surface du matériau de revêtement (3) opposée à la surface sur laquelle est disposé le matériau d'absorption des sons (2).

3. Utilisation selon la revendication 1, **caractérisé en ce que** le textile non-tissé présente un poids unitaire de 200 g/m³ à 600 g/m³.

4. Utilisation selon la revendication 2, **caractérisé en ce que** le matériau de structure (4) comporte au moins une structure sélectionnée à partir du groupe constitué de mailles, motifs tissés et trous.
